# EUROPÄISCHE PATENTANMELDUNG

(11) **EP 4 325 466 A1**
(43) Veröffentlichungstag der Anmeldung: **21.02.2024**
(21) Anmeldenummer: 22190950.0
(22) Anmeldetag: 18.08.2022
(51) Int. Cl.: G09B 19/00

(54) **ERFASSUNG EINES PERFORMANCEDATENSATZES EINER SPORTBEWEGUNG**

(71) Anmelder: Benecke-Kaliko AG, 30419 Hannover (DE)
(72) Erfinder: Dr. Farazi, Sima, 30165 Hannover (DE); Castro, Filipa, 30165 Hannover (DE); Lindner, Felix, 30165 Hannover (DE); Hidalgo Lucio, Gabriel Cristian, 30165 Hannover (DE)
(74) Vertreter: Continental Corporation

(57) **Zusammenfassung**

Die Erfindung betrifft ein Verfahren (100) zur Erfassung eines Performancedatensatzes für eine von einer Person (310) durchgeführte Sportbewegung mit mehreren Bewegungsphasen (212, 214). Es wird vorgeschlagen, von der Sportbewegung aufgezeichnete Videodaten und Nutzdaten zu empfangen, wobei auf Basis der Videodaten die Bewegungsphasen (212, 214) der Sportbewegung erkannt und die Nutzdaten in den einzelnen Bewegungsphasen (212, 214) zugeordnete Nutzdatenteile unterteilt werden, wobei auf Basis der Nutzdaten bewegungsphasenspezifische Performancedaten ermittelt und als Performancedatensatz erfasst werden.

## Beschreibung

Die vorliegende Erfindung betrifft ein Verfahren und eine Vorrichtung zur Erfassung eines Performancedatensatzes für eine von einer Person durchgeführte Sportbewegung mit mehreren Bewegungsphasen.

Beim Erlernen oder Optimieren einer komplexen Sportbewegung, wie z.B. einem Golfschlag, ist es vorteilhaft, objektive Informationen über die eigene Performance in Form von Nutzdaten, d.h. mittels Sensoren aufgezeichneten physikalischen Großen, zur Verfügung zu haben. Anhand einer Analyse dieser Informationen lassen sich beispielsweise Fehlhaltungen in einer oder mehreren Bewegungsphasen der Sportbewegung präzise ermitteln. Darauf basierend kann anschließend eine gezielte Auswahl geeigneter Maßnahmen zur Verbesserung der Performance erfolgen.

Aus dem Bereich Golfsport offenbart beispielsweise die US 2014 018181 A1 die Aufzeichnung von Beschleunigungsdaten mittels an der Hüfte des Golfspielers befestigten Beschleunigungssensoren. Hieraus lässt sich z.B. die Neigung der Hüfte des Golfspielers ermitteln und eine Abweichung zu einer für die entsprechende Bewegungsphase optimalen Hüftneigung identifizieren.

Ein Problem, das mit der Auswertung derartiger Nutzdaten einhergeht, besteht darin, dass die üblicherweise zeitaufgelöst aufgezeichneten Messgrößen nicht eindeutig einer bestimmten Bewegungsphase zugeordnet werden können. Komplexen Sportbewegung lassen sich in verschiedene Bewegungsphasen einteilen, in denen jeweils unterschiedliche Bewegungsmuster durchzuführen sind. So wird beispielsweise beim Kraulschwimmen zwischen Rückholphase, Zugphase und Druckphase. Ferner wird etwa beim Golfschwung zwischen den Phasen Aufstellen zum Ausführen des Golfschwunges (Setup), Rückschwung, Abschwung und Durchschwung unterschieden. Eine nach Bewegungsphasen differenzierte Analyse der Nutzdaten würde viele Vorteile bieten, denn ein bestimmter Beschleunigungswert kann für eine bestimmte Bewegungsphase optimal, hingehen für eine andere Bewegungsphase suboptimal sein.

Die US 2014 018181 A1 versucht dieses Problem zu lösen, indem parallel zu den eigentlichen Nutzdaten ein Audiosignal mittels eines Mikrofons aufgezeichnet wird, das auf Vorliegen eines mit dem Aufschlagen des Golfschlägers auf den Golfball einhergehenden Geräuschs hin überwacht wird. Durch Korrelation der Nutzdaten mit dem Audiosignal lassen sich die Nutzdaten zumindest in solche vor dem Aufschlag und solche nach dem Aufschlag einteilen. Eine solche Einteilung ist allerdings nicht präzise genug, um eine optimale Auswertung der Nutzdaten zu gewährleisten. Insbesondere komplexere Bewegungen, wie der Golfschlag, lassen sich in mehr als zwei verschiedene Bewegungsphasen unterteilen, deren Performance einzeln optimiert werden kann.

Es ist daher Aufgabe der vorliegenden Erfindung, ein Verfahren zur Erfassung eines Performancedatensatzes für eine von einer Person durchgeführte Sportbewegung mit mehreren Bewegungsphasen bereitzustellen, bei dem die einzelnen Bewegungsphasen der Sportbewegung präzise erkannt und die aufgezeichneten Nutzdaten in zuverlässiger Weise den Bewegungsphasen zugeordnet werden können.

Diese Aufgabe wird durch ein Verfahren mit den Merkmalen des Anspruchs 1, einer Vorrichtung mit den Merkmalen des Anspruchs 7, ein System mit den Merkmalen des Anspruchs 8 und ein Computerprogrammprodukt mit den Merkmalen des Anspruchs 11 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Bei dem erfindungsgemäßen computerimplementierten Verfahren zur Erfassung eines Performancedatensatzes für eine von einer Person durchgeführte Sportbewegung mit mehreren Bewegungsphasen werden von der Sportbewegung mittels einer auf die Person gerichteten Kamera aufgezeichnete Videodaten und mittels einer an der Person angeordneten Sensorvorrichtung aufgezeichnete Nutzdaten empfangen, wobei auf Basis der Videodaten die Bewegungsphasen der Sportbewegung erkannt und die Nutzdaten in den einzelnen Bewegungsphasen zugeordnete Nutzdatenteile unterteilt werden, wobei auf Basis der Nutzdaten bewegungsphasenspezifische Performancedaten ermittelt und als Performancedatensatz erfasst werden.

Der erfindungsgemäßen Lösung liegt die Idee zugrunde, Videodaten und Nutzdaten in geschickter Weise zu kombinieren und dadurch zuverlässige Informationen über die Performance einer Person in Bezug auf eine Sportbewegung zu erhalten. Videodaten eignen sich nur begrenzt zur Analyse der Performance, da sich aus rein aus der Distanz aufgezeichneten visuellen Informationen nur bedingt Rückschlüsse auf die Qualität der Ausführung der Bewegung ziehen lassen. Hingehen eignen sich Videodaten hervorragend zur Erkennung der jeweiligen Bewegungsphasen. Andererseits ist es nicht möglich, allein aus den Nutzerdaten zuverlässig zwischen einzelnen Bewegungsphasen zu unterscheiden, da die aufgezeichneten Muster von Spieler zu Spieler sehr unterschiedlich sein können. Dagegen eignen sich die Nutzdaten ausgezeichnet zur objektiven Bewertung der Performance. Mit anderen Worten werden im Rahmen des erfindungsgemäßen Verfahrens Nutzdaten und Videodaten einander ergänzend verwendet.

Die Nutzdaten enthalten mittels der an der Person angeordneten Sensorvorrichtung erfasste physikalische Messgrößen, welche z.B. Informationen über Position, Geschwindigkeit, Beschleunigung, Rotationsgeschwindigkeit, Rotationsbeschleunigung, Kraft, Druck, etc. angeben. Auf Basis dieser Nutzdaten können bewegungsphasenspezifische Performancedaten ermittelt und als Performancedatensatz erfasst werden. Beispielsweise können hierzu die in den Nutzdaten enthaltenen Werte mit bewegungsphasenspezifischen Sollwerten verglichen werden. In Abhängigkeit einer Abweichung zwischen Wert und Sollwert können anschließend Performancedaten errechnet und gespeichert werden. Anhand des Performancedatensatzes lassen sich geeignete Maßnahmen zur Verbesserung der Performance, wie z.B. Anpassungen der Bewegungsmuster, präzise und auf objektiver Basis identifizieren. Die Nutzdaten können unterschiedliche physikalische Messgrößen enthalten, die jeweils mittels unterschiedlicher Sensoren aufgezeichnet sein können.

Auf Basis der Videodaten lassen sich die einzelnen Bewegungsphasen der Sportbewegung z.B. anhand eines oder mehrerer Bildauswertealgorithmen äußerst zuverlässig bestimmen und mit den aufgezeichneten Nutzdaten korrelieren. Auf diese Weise können die Nutzdaten in präziser Weise den einzelnen Bewegungsphasen zugeordnet werden. Vorzugsweise sind die Videodaten und Nutzdaten zeitgleich aufgezeichnet, was eine Korrelation der Daten erleichtert. Alternativ oder zusätzlich können die Videodaten und Nutzdaten synchronisiert werden. Durch die allgegenwärtige Verfügbarkeit mitunter leistungsstarker Kameras in Smartphones (oder ähnlichen portablen Geräten mit Computer-Funktionalitäten und Konnektivitäten) ist die Aufzeichnung von Videodaten ohne großen Aufwand umsetzbar. Ferner bieten Smartphones auch eine Infrastruktur, auf der das erfindungsgemäße Verfahren realisiert werden kann. So können während der durch die Person durchgeführten Sportbewegung mit einer auf die Person gerichteten Kamera eines Smartphones die Videodaten aufgezeichnet werden, während (gleichzeitig) die Nutzdaten mittels einer an der Person angeordneten Sensorvorrichtung aufgezeichnet und über eine Kommunikationsschnittstelle der Sensorvorrichtung an das Smartphone gesendet werden. Ferner kann das erfindungsgemäße Verfahren, einschließlich der Erkennung der Bewegungsphasen der Sportbewegung auf Basis der Videodaten, auf der Infrastruktur des Smartphones ausgeführt werden. Alternativ oder zusätzlich kann das erfindungsgemäße Verfahren zumindest teilweise extern, z.B. auf einem externen Server oder in einer Cloud, ausgeführt werden, wobei das Smartphone und/oder die Sensorvorrichtung hierzu mit entsprechenden Kommunikationsschnittstellen ausgestattet sein können.

Die Erkennung der Bewegungsphasen der Sportbewegung auf Basis der Videodaten umfasst vorzugsweise das Vergleichen zumindest eines Videoeinzelbildes aus den Videodaten und/oder eines oder mehrerer Merkmale des zumindest einen Videoeinzelbildes mit Referenzen in einer Datenbank, insbesondere wobei eine Klassifizierung des zumindest einen Videoeinzelbildes und/oder eines oder mehrerer seiner Merkmale mittels statistischer und/oder analytischer Methoden, wie z.B. einer Varianzanalyse und/oder einer (Support Vector-) Regression, erfolgt. Alternativ oder zusätzlich kann die Auswertung eine Klassifizierung des zumindest einen Videoeinzelbildes und/oder eines oder mehrerer Merkmale des zumindest einen Videoeinzelbildes anhand eines Machine-Learning-Algorithmus (z.B. eines neuronalen Netzwerkes), insbesondere anhand eines vorab mit einer Vielzahl von Referenzen und/oder mittels Deep Learning trainierten Machine-Learning-Algorithmus umfassen.

In einer bevorzugten Ausgestaltung des erfindungsgemäßen Verfahrens werden die Videodaten als Videoeinzelbilder in einem volatilen Speicher, insbesondere für ein festgelegtes Zeitintervall, gespeichert, wobei die Videoeinzelbilder nacheinander anhand eines insbesondere trainieren Bildauswertealgorithmus auf das Vorliegen einer der mehreren Bewegungsphasen überprüft werden. Dies ermöglicht ein optimales Datenmanagement. So kann in Abhängigkeit, ob eine Bewegungsphase auf einem Videoeinzelbild erkannt wurde, das Speichern dieses und gegebenenfalls auch der nachfolgenden Videoeinzelbilder in einem nicht-volatilen Speicher getriggert werden. Auf diese Weise werden ausschließlich für die Analyse der Performance relevante Videodaten in einem nicht-volatilen Speicher gespeichert. Auch können weitere Funktionen bzw. Verfahrensschritte durch das Erkennen einer der Bewegungsphasen auf einem Videoeinzelbild getriggert werden. Im Fall, dass die Überprüfung eines Vorliegens einer der mehreren Bewegungsphasen in den Videoeinzelbildern im Wesentlichen in Echtzeit durchgeführt wird, kann damit eine Aufzeichnung der Nutzdaten oder eine Speicherung der Nutzdaten in dem nicht-volatilen Speicher getriggert werden. Mit anderen Worten können auf diese Weise der Beginn und das Ende der Sportbewegung erkannt und lediglich die für die Sportbewegung relevanten Daten automatisch aufgezeichnet und/oder in einem nicht-volatilen Speicher gespeichert werden. Gleichsam ist es in einer weiteren bevorzugten Ausführungsform des erfindungsgemäßen Verfahrens auch möglich, den Beginn und das Ende der Sportbewegung an sich, d.h. ohne Differenzierung in Bewegungsphasen, allein aus Nutzdaten zu erkennen.

In einer weiteren bevorzugten Ausgestaltung des erfindungsgemäßen Verfahrens ist die Sportbewegung ein Golfschwung ist, wobei anhand der Videodaten zumindest eine der folgenden Bewegungsphasen erkannt werden: Aufstellen zum Ausführen des Golfschwunges (Setup), Rückschwung, Abschwung, Durchschwung. Mit dem erfindungsgemäßen Verfahren konnten für den Anwendungsfall des Golfschwunges unter Verwendung der aufgelisteten Bewegungsphasen hervorragende Ergebnisse erzielt werden.

In einer weiteren bevorzugten Ausgestaltung des erfindungsgemäßen Verfahrens wird bei der Erkennung der Bewegungsphasen zumindest einer der folgenden Bewegungsmomente erkannt: Ansprechen des Golfballes (address), Spitze des Rückschwungs (top of backswing), Auftreffen, Endposition nach dem Golfschwung (finish). Die Berücksichtigung der aufgeführten Bewegungsmomente in den Videodaten ermöglicht eine noch zuverlässigere Erkennung der Bewegungsphasen.

In einer weiteren bevorzugten Ausgestaltung des erfindungsgemäßen Verfahrens wird bei der Erkennung der Bewegungsphasen zumindest einer der folgenden Bewegungsmomente erkannt: der Moment, in dem der Golfschläger während des Rückschwungs parallel zum Boden ist; der Moment, in dem der Golfschläger während des Abschwungs parallel zum Boden ist; der Moment, in dem der Golfschläger während des Durchschwungs vertikal zum Boden ist. Die aufgeführten Bewegungsmomente sind klar definierte Momente und können auf Basis der Videodaten noch besser erkannt werden, was wiederum eine noch zuverlässigere Erkennung der Bewegungsphasen erlaubt.

Bevorzugt erfolgt das Erkennen der Bewegungsphasen und/oder Bewegungsmomente unter Berücksichtigung einer oder mehrerer der folgenden Kontextinformationen: Logische Reihenfolge und/oder Vollständigkeit der Bewegungsmomente und/oder Bewegungsphasen, minimale und/oder maximale Dauer der Sportbewegung. Beispielsweise gilt eine Erkennung erst dann als verifiziert und für die weitere Datenverarbeitung verwendbar, wenn sämtliche Bewegungsphasen 1) Ansprechen des Golfballes (address), 2) Spitze des Rückschwungs (top of backswing), 3) Auftreffen und 4) die Endposition nach dem Golfschwung (finish) in der richtigen Reihenfolge innerhalb einer vorgegebenen Zeitspanne erkannt wurden.

In einer weiteren bevorzugten Ausgestaltung des erfindungsgemäßen Verfahrens sind die Nutzdaten mittels eines oder mehrerer Drucksensoren der Sensorvorrichtung aufgezeichnete Fußdruckdaten. Vorzugsweise sind der eine oder die mehreren Drucksensoren dabei in einer oder in zwei Schuhsohlen für die Person angeordnet, bevorzugt darin integriert. Insbesondere für den Anwendungsfall des Golfschwunges haben sich bewegungsphasenspezifisch ausgewertete Fußdruckdaten als besonders aussagekräftig erwiesen.

Gemäß dem bereits vor- sowie dem weiter unten nachbeschriebenen wird die eingangs gestellte Aufgabe auch durch eine Vorrichtung zur elektronischen Datenverarbeitung mit den Merkmalen des Anspruchs 7 gelöst. Die Vorrichtung weist Mittel zur Ausführung des vor- bzw. nachbeschriebenen Verfahrens auf, wodurch die gleichen Vorteile realisiert werden können.

Gemäß dem bereits vor- sowie dem weiter unten nachbeschriebenen wird die eingangs gestellte Aufgabe auch durch ein System mit den Merkmalen des Anspruchs 8 gelöst. Das erfindungsgemäße System zur Erfassung eines Performancedatensatzes für eine von einer Person durchgeführte Sportbewegung mit mehreren Bewegungsphasen, enthält
- eine Kamera zur Aufzeichnung von Videodaten der Sportbewegung,
- eine Sensorvorrichtung zur Aufzeichnung von Nutzdaten der Sportbewegung, die an der Person angeordnet werden kann, und
- eine Vorrichtung zur elektronischen Datenverarbeitung nach Anspruch 6.

Das erfindungsgemäße System ist zur Durchführung des vor- bzw. nachbeschriebenen erfindungsgemäßen Verfahrens ausgebildet, wodurch die gleichen Vorteile realisiert werden können. Darüber hinaus verfügt das System noch über die Mittel zur Aufzeichnung der Videodaten und der Nutzdaten. Bevorzugt sind die Kamera und die Vorrichtung zur elektronischen Datenverarbeitung in ein und demselben Gerät, z.B. einem Smartphone, integriert. Insbesondere ist die Sensorvorrichtung zur insbesondere kabellosen Übertragung der aufgezeichneten Nutzdaten an die Vorrichtung zur elektronischen Datenverarbeitung ausgebildet. Hierzu können die Sensorvorrichtung und die Vorrichtung zur elektronischen Datenverarbeitung mit entsprechenden Kommunikationsschnittstellen ausgerüstet sein.

In einer bevorzugten Ausgestaltung des erfindungsgemäßen Systems weist die Sensorvorrichtung einen oder mehrere Drucksensoren zur Aufzeichnung von Fußdruckdaten als Nutzdaten auf. Insbesondere für den Anwendungsfall des Golfschwunges haben sich bewegungsphasenspezifisch ausgewertete Fußdruckdaten als besonders aussagekräftig erwiesen. Vorzugsweise weist die Sensorvorrichtung hierbei eine oder zwei Schuhsohlen auf, in der bzw. in denen der oder die Drucksensoren angeordnet, insbesondere integriert sind. Auf diese Weise wird eine kompakte Sensorvorrichtung bereitgestellt, die in einfacher Weise an der Person angeordnet werden kann.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Ausführungsform des erfindungsgemäßen Systems mit dem das erfindungsgemäße Verfahren ausgeführt werden kann;
- Fig. 2: ein Ablaufschema einer Ausführungsform eines erfindungsgemäßen Verfahrens; und
- Fig. 3: einen auf den Nutzdaten basierenden Graphen eines bespielhaften zeitlichen Verlaufs des Fußdrucks, wobei die Nutzdaten teilweise anhand des erfindungsgemäßen Verfahrens Bewegungsphasen der Sportbewegung zugeordnet sind.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

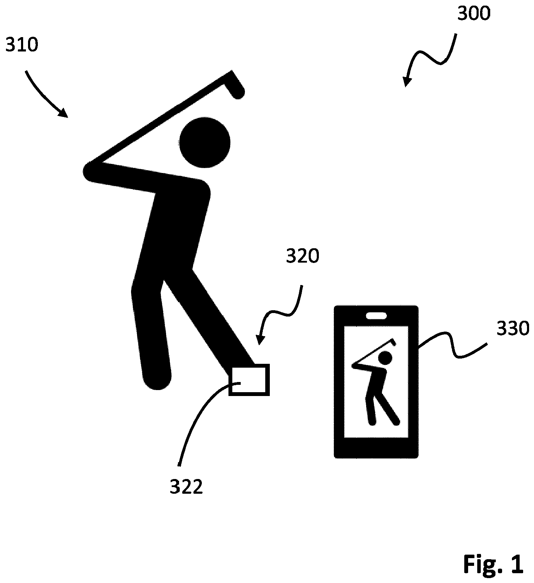

Fig. 1 zeigt ein erfindungsgemäßes System 300 zur Erfassung eines Performancedatensatzes für eine von einer Person 310 durchgeführte Sportbewegung mit mehreren Bewegungsphasen. Im vorliegenden Fall ist die Sportbewegung ein Golfschwung, bei dem zwischen den vier Bewegungsphasen 1) Aufstellen zum Ausführen des Golfschwunges (Setup), 2) Rückschwung, 3) Abschwung und 4) Durchschwung unterschieden werden kann.

Das System enthält eine an der Person 310 angeordnete Sensorvorrichtung 320 zur Aufzeichnung von Nutzdaten der Sportbewegung. Im vorliegenden Fall umfasst die Sensorvorrichtung 320 einen an dem führenden Fuß der Person 320 angeordneten Drucksensor 322 zur Aufzeichnung von Nutzdaten in Form von Fußdruckdaten. Bevorzugt ist der Drucksensor 322 dabei in einer Schuhsohle der Sensorvorrichtung 320 angeordnet, insbesondere darin integriert. Die Sensorvorrichtung 320 kann auch mehrere solcher Drucksensoren 322 enthalten. Die Sensorvorrichtung 320 weist eine (hier nicht dargestellte) Kommunikationsschnittstelle zur drahtlosen Kommunikation mit dem Smartphone 330 auf, über die z.B. die aufgezeichneten Nutzdaten an das Smartphone 330 gesendet werden können.

Das System 300 enthält ferner eine Kamera zur Aufzeichnung von Videodaten der Sportbewegung sowie eine Vorrichtung zur elektronischen Datenverarbeitung, die im vorliegenden Fall in ein und demselben Gerät, einem Smartphone 330, integriert sind. Die Vorrichtung zur elektronischen Datenverarbeitung ist dazu ausgebildet und eingerichtet, das erfindungsgemäße Verfahren auszuführen. Beispielsweise wurde hierzu ein erfindungsgemäßes Computerprogrammprodukt auf dem Smartphone installiert.

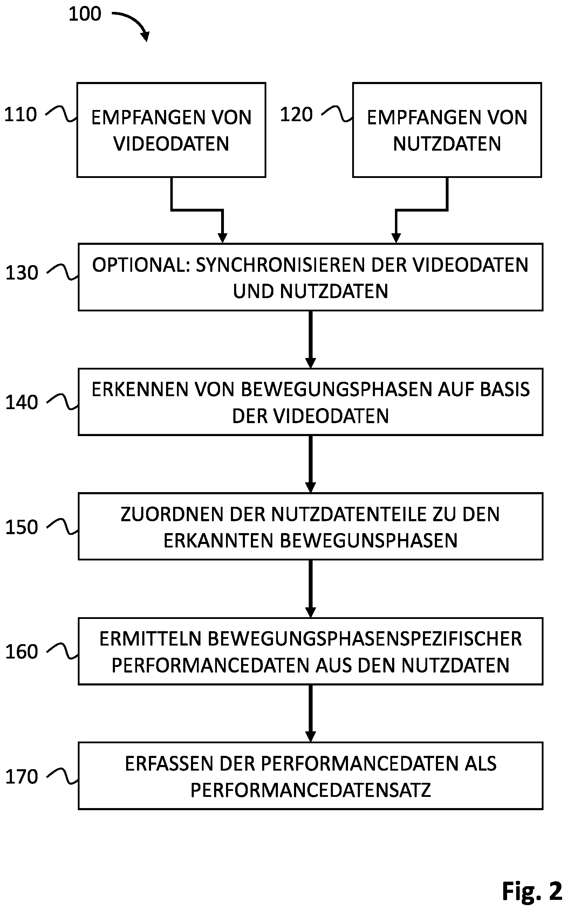

Fig. 2 zeigt ein Ablaufschema einer Ausführungsform eines erfindungsgemäßen Verfahrens 100, wie es beispielsweise mit dem System 300 aus Fig. 1 ausgeführt werden kann. Hierbei werden mittels einer auf die Person gerichteten Kamera aufgezeichnete Videodaten empfangen (Schritt 110). Ferner werden vorzugsweise gleichzeitig mittels einer an der Person angeordneten Sensorvorrichtung aufgezeichnete Nutzdaten empfangen (Schritt 120). Da die Nutzdaten und die Videodaten in der Regel mit unterschiedlichen Mitteln aufgezeichnet werden, wobei die Aufzeichnung unter Umständen jeweils mit unterschiedlicher Zeitauflösung erfolgt, können die Daten in einem optionalen Schritt miteinander synchronisiert werden (Schritt 130), wobei die Zeitmarken in den Videodaten den Zeitmarken in den Nutzdaten zumindest teilweise zugeordnet werden. Auf Basis der Videodaten werden die Bewegungsphasen der Sportbewegung erkannt (Schritt 140). Das Synchronisieren (Schritt 130) kann auch nach der Erkennung der Bewegungsphasen auf Basis der Videodaten (Schritt 140) erfolgen. Anschließend werden die Nutzdaten in den einzelnen Bewegungsphasen zugeordnete Nutzdatenteile unterteilt (Schritt 150), wobei auf Basis der Nutzdaten bewegungsphasenspezifische Performancedaten ermittelt (Schritt 160) und als Performancedatensatz erfasst werden (Schritt 170).

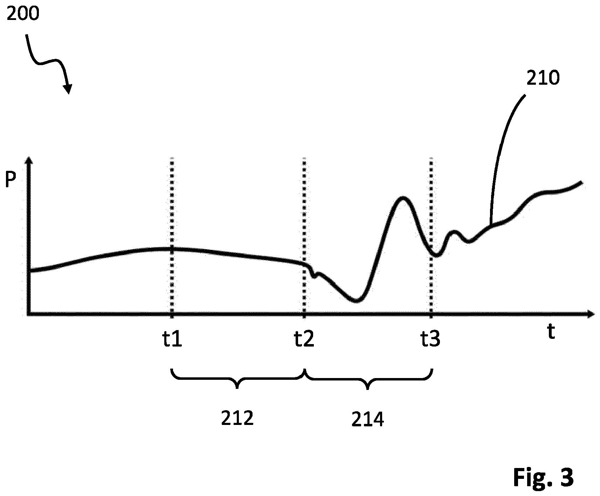

Fig. 3 zeigt einen auf Fußdruckdaten (Nutzdaten) basierenden Graphen 200 eines bespielhaften Verlaufs 210 des Fußdrucks P des führendes Fußes einer Person beim Golfschwung über die Zeit t. Auf Basis von mit den Fußdruckdaten synchronisierten Videodaten, die von dem Golfschwung gleichzeitig aufgezeichnet worden sind, wurden folgende Bewegungsmomente des Golfschwungs erkannt: Zum Zeitpunkt t1 ein Ansprechen des Golfballes (address), zum Zeitpunkt t2 die höchste Stelle des Golfschlägers beim Rückschwung und zum Zeitpunkt t3 das Auftreffen des Schlägers auf den Golfball. Daraus wurden die folgenden Bewegungsphasen ermittelt: Im Intervall t1 bis t2 Rückschwung 212 und im Intervall t2 bis t3 Abschwung 214. Zur Ermittlung der bewegungsphasenspezifischen Performancedaten kann beispielsweise der zeitliche Verlauf 210 des Fußdrucks P in der Phase des Abschwungs 214 mit einer hinterlegten oder speziell für die Person, z.B. in Abhängigkeit ihrer Erfahrung, ihres Alters und/oder des von ihr verwendeten Schlägers, ermittelten Referenz- oder Sollkurve für diese Bewegungsphase verglichen und ggf. eine Abweichung ermittelt werden. Die so ermittelten bewegungsphasenspezifischen Performancedaten können anschließend in einem Performancedatensatz erfasst werden, anhand dessen sich geeignete Maßnahmen zur Verbesserung der Performance, wie z.B. Anpassungen der Bewegungsmuster, präzise und auf objektiver Basis identifizieren lassen.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Computerimplementiertes Verfahren (100) zur Erfassung eines Performancedatensatzes für eine von einer Person (310) durchgeführte Sportbewegung mit mehreren Bewegungsphasen (212, 214), wobei von der Sportbewegung mittels einer auf die Person (310) gerichteten Kamera aufgezeichnete Videodaten und mittels einer an der Person (310) angeordneten Sensorvorrichtung (320) aufgezeichnete Nutzdaten empfangen werden, wobei auf Basis der Videodaten die Bewegungsphasen (212, 214) der Sportbewegung erkannt und die Nutzdaten in den einzelnen Bewegungsphasen (212, 214) zugeordnete Nutzdatenteile unterteilt werden, wobei auf Basis der Nutzdaten bewegungsphasenspezifische Performancedaten ermittelt und als Performancedatensatz erfasst werden.

2. Verfahren (100) nach Anspruch 1, wobei die Videodaten als Videoeinzelbilder in einem volatilen Speicher gespeichert werden, wobei die Videoeinzelbilder nacheinander anhand eines insbesondere trainieren Bildauswertealgorithmus auf das Vorliegen einer der mehreren Bewegungsphasen (212, 214) überprüft werden.

3. Verfahren (100) nach Anspruch 1 oder 2, wobei die Sportbewegung ein Golfschwung ist, wobei anhand der Videodaten zumindest eine der folgenden Bewegungsphasen (212, 214) erkannt werden: Aufstellen zum Ausführen des Golfschwunges (Setup), Rückschwung (212), Abschwung (214), Durchschwung.

4. Verfahren (100) nach einem der vorangehenden Ansprüche, wobei die Sportbewegung ein Golfschwung ist, wobei bei der Erkennung der Bewegungsphasen (212, 214) zumindest einer der folgenden Bewegungsmomente erkannt wird: Ansprechen des Golfballes (address), Spitze des Rückschwungs (top of backswing), Auftreffen, Endposition nach dem Golfschwung (finish).

5. Verfahren (100) nach einem der vorangehenden Ansprüche, wobei die Sportbewegung ein Golfschwung ist, wobei bei der Erkennung der Bewegungsphasen (212, 214) zumindest einer der folgenden Bewegungsmomente erkannt wird: der Moment, in dem der Golfschläger während des Rückschwungs parallel zum Boden ist; der Moment, in dem der Golfschläger während des Abschwungs parallel zum Boden ist; der Moment, in dem der Golfschläger während des Durchschwungs vertikal zum Boden ist.

6. Verfahren (100) nach einem der vorangehenden Ansprüche, wobei die Nutzdaten mittels eines oder mehrerer Drucksensoren (322) der Sensorvorrichtung (320) aufgezeichnete Fußdruckdaten sind, insbesondere wobei der eine oder die mehreren Drucksensoren (322) in einer oder in zwei Schuhsohlen für die Person (310) angeordnet sind.

7. Vorrichtung zur elektronischen Datenverarbeitung, umfassend Mittel zur Ausführung des Verfahrens (100) nach einem der Ansprüche 1 bis 6.

8. System (300) zur Erfassung eines Performancedatensatzes für eine von einer Person (310) durchgeführte Sportbewegung mit mehreren Bewegungsphasen (212, 214), enthaltend
- eine Kamera zur Aufzeichnung von Videodaten der Sportbewegung,
- eine Sensorvorrichtung (320) zur Aufzeichnung von Nutzdaten der Sportbewegung, die an der Person (310) angeordnet werden kann, und
- eine Vorrichtung zur elektronischen Datenverarbeitung nach Anspruch 7.

9. System (300) nach Anspruch 8, wobei die Sensorvorrichtung (320) einen oder mehrere Drucksensoren (322) zur Aufzeichnung von Fußdruckdaten als Nutzdaten aufweist.

10. System (300) nach Anspruch 9, wobei die Sensorvorrichtung (320) eine oder zwei Schuhsohlen aufweist, in der bzw. in denen der oder die Drucksensoren (322) angeordnet, insbesondere integriert sind.

11. Computerprogrammprodukt, umfassend Befehle, die bei der Ausführung des Programms durch einen Computer diesen veranlassen, das Verfahren (100) nach einem der Ansprüche 1 bis 6 auszuführen.
